# EUROPÄISCHE PATENTANMELDUNG

(11) **EP 2 083 178 A2**
(43) Veröffentlichungstag der Anmeldung: **29.07.2009**
(21) Anmeldenummer: 08168972.1
(22) Anmeldetag: 12.11.2008
(51) Int. Cl.: F16B 12/24, F16B 13/14

(54) **Verbindungselement**

(30) Priorität: 25.01.2008 DE 202008001093 U
(71) Anmelder: Hettich-Heinze GmbH & Co. KG, 32139 Spenge (DE)
(72) Erfinder: Sobolewski, Uwe, 32257 Bünde (DE); Andschus, Stefan, 32312 Lübbecke (DE); Schael, Oliver, 32278 Kirchlengern (DE); Gorges, Alexander, 33790 Halle/Westf. (DE)
(74) Vertreter: Dantz, Jan Henning

(57) **Zusammenfassung**

Es wird ein Verbindungselement (1), insbesondere zur Montage von Beschlagsteilen an Leichtbauplatten (20) offenbart, mit einer Hülse (3), die in eine Aussparung eines Bauteils einfügbar ist und an einem oberen Abschnitt (2) und einem unteren Abschnitt (4) jeweils mehrere über den Umfang verteilte Öffnungen (5, 6) aufweist. Dabei ist ein mittlerer Abschnitt geschlossen ausgebildet, wobei in der Hülse (3) ein oberes Klebstoffreservoir (11) und ein unteres Klebstoffreservoir (12) angeordnet ist. Dadurch kann das Verbindungselement (1) auf einfache Weise mit einer Leichtbauplatte verklebt werden.

## Beschreibung

Die vorliegende Erfindung betrifft ein Verbindungselement, insbesondere zur Montage von Beschlagsteilen an Leichtbauplatten, mit einer Hülse, die in eine Aussparung eines Bauteils einfügbar ist und an einem oberen Abschnitt und einem unteren Abschnitt jeweils mehrere über den Umfang verteilte Öffnungen aufweist, wobei ein mittlerer Abschnitt geschlossen ausgebildet ist.

Die EP 919 733 offenbart einen Dübel zur Befestigung von Möbelbeschlagteilen, der einen inneren Hohlraum aufweist, in dem Klebstoff in einer zerstörbaren Kapsel angeordnet ist. Bei der Montage des Dübels soll die Kapsel durch eine Anpresskraft der Dübelwände zerstört werden, damit der Dübel in dem Möbelteil verklebt werden kann. Falls die Anpresskraft bei der Montage des Dübels nicht ausreicht, wird die Klebstoffkapsel nicht zerstört. Insofern ist eine hohe Genauigkeit bei der Montage erforderlich. Die Verteilung des Klebstoffes hängt von der Verformung des Dübels bei der Montage ab, so dass eine gleichmäßige Klebstoffverteilung nicht gewährleistet werden kann.

Die DE 40 06 506 offenbart einen Dübel, der an einem Endabschnitt zwei getrennte Kammern mit Kleberkomponenten eines Zweikomponentenklebers aufweist. Bei der Montage werden die Kammern miteinander verbunden um den Klebstoff zu aktivieren und den Dübel in einer Bohrung in einer Wand zusätzlich zu verkleben. Eine solche Anordnung ist für eine Wandmontage geeignet, allerdings lassen sich Möbelplatten, insbesondere in Leichtbauweise nur schlecht mit einem solchen Dübel verbinden.

Die WO 2006/106131 offenbart einen Verbindungseinsatz mit einer Hülse und einem Innenteil, wobei zwischen Innenteil und Hülse ein Klebstoffzuführkanal angeordnet ist. Das Einbringen von Klebstoff in den Verbindungseinsatz ist allerdings relativ aufwendig.

Es ist daher Aufgabe der vorliegenden Erfindung ein Verbindungselement, insbesondere zur Montage von Beschlagsteilen an Leichtbauplatten zu schaffen, das leicht zu montieren ist und einen sicheren Halt gewährleistet.

Diese Aufgabe wird mit einem Verbindungselement mit den Merkmalen des Anspruches 1 gelöst.

Erfindungsgemäß sind in der Hülse ein oberes Klebstoffreservoir und ein unteres Klebstoffreservoir angeordnet, wobei über einen Stempel der Klebstoff aus den Klebstoffreservoirs verdrängbar ist, damit der Klebstoff über die Öffnungen am oberen und unteren Abschnitt austritt. Die Klebstoffreservoirs können dabei getrennt voneinander sein oder es kann ein einteiliges Klebstoffreservoir mit einem oberen und einem unteren Bereich vorgesehen sein. Dadurch kann ein Verbindungselement auf einfache Weise mit einem Bauteil wie einer Leichtbauplatte verklebt werden, wobei durch das Verkleben in einem oberen Bereich und einem unteren Bereich eine stabile Befestigung erhalten werden kann.

Vorzugsweise sind die Klebstoffreservoirs über ein bewegliches Trennelement voneinander getrennt, wobei durch das Verdrängen des Klebstoffes mittels eines Stempels und des beweglichen Trennelementes weitgehend definierte Strömungsverhältnisse erzeugt werden können und über die Öffnungen an dem oberen und unteren Abschnitt die Verteilung des Klebstoffes relativ exakt vorgegeben werden kann. Dies verbessert das Klebeergebnis, wobei das Verbindungselement auf einfache Weise montiert werden kann.

Gemäß einer bevorzugten Ausgestaltung der Erfindung ist am oberen Abschnitt der Hülse oberhalb der Öffnungen ein geschlossener Ring vorgesehen, der klemmend an einer Öffnung in einer Deckschicht einer Leichtbauplatte festlegbar ist. Dadurch kann das Verbindungselement an einer Leichtbauplatte montiert werden, wobei der geschlossene Ring dafür sorgt, dass der durch die Öffnungen am oberen Abschnitt austretende Klebstoff an einer Innenseite der Deckschicht verklebt, aber durch die geschlossene Ausbildung des Ringes eine Außenfläche der Deckschicht nicht verschmutzt wird. Der Ring kann dabei eine innere zylindrische Öffnung aufweisen, in die der Stempel im Wesentlichen passgenau einfügbar ist, so dass auch an dem Übergang zwischen Stempel und Ring kein oder nur wenig Klebstoff austreten kann.

Vorzugsweise sind an einer Innenseite der Hülse ein oder mehrere Längskanäle für den Klebstoff ausgebildet. Dadurch kann das Verdrängen des Klebstoffes mittels des Stempels gezielt erfolgen, wobei gerade das obere Klebstoffreservoir die Möglichkeit besitzt, über die Längskanäle zu den Öffnungen am oberen Abschnitt zu gelangen. Der Klebstoff im oberen Klebstoffreservoir muss zumindest teilweise entgegen der Bewegungsrichtung des Stempels strömen, so dass die Ausbildung entsprechender Längskanäle, die sich zumindest bis zu einer Grenze an dem mittleren Abschnitt erstrecken, vorteilhaft ist.

In anderer Ausführung können die Längskanäle auch den mittleren Abschnitt überschreiten und erst dort enden, wo sich die Kante des Trennelementes befindet, die das obere Klebstoffreservoir abschließt, wenn das Trennelement seine Bewegungsrichtung nach unten abgeschlossen bzw. seine untere Endposition erreicht hat.

Für einen einfachen Aufbau des Verbindungselementes ist das Trennelement als Trennscheibe ausgebildet, die von dem mittleren Abschnitt zu dem unteren Abschnitt verschiebbar ist. Dabei kann das Trennelement nach dem Verschieben in den unteren Abschnitt die Öffnungen im unteren Abschnitt zumindest weitgehend verschließen. Denn wenn das Trennelement in der Endposition angeordnet ist, soll der Klebstoff des Klebstoffreservoirs aus dem oberen Abschnitt auch an dem oberen Abschnitt aus den Öffnungen austreten, um dort für ein Verkleben zu sorgen. Dies kann gewährleistet werden, wenn nach dem Verschieben des Trennelementes der untere Abschnitt zumindest weitgehend abgedichtet ist.

Für ein gezieltes Verkleben des Verbindungselementes sind die Öffnungen an dem oberen und dem unteren Abschnitt so ausgebildet, dass sie eine Erstreckung in Längsrichtung der Hülse zwischen 1 mm und 10 mm, vorzugsweise 2 mm bis 7 mm aufweisen. Denn meist soll der Verbindungseinsatz nur an einer Innenseite einer oberen und unteren Deckschicht verklebt werden, so dass das positionsgenaue Austreten des Klebstoffes ein Vorteil ist.

Um beim Einführen des Stempels die Verdrängung des Klebstoffes in vorbestimmter Weise vornehmen zu können ist die Öffnungsfläche der Öffnungen am oberen Abschnitt und der Öffnungen am unteren Abschnitt je nach Anwendungsfall gleich groß, kleiner oder größer ausgebildet. Dadurch kann gewährleistet werden, dass entweder zunächst das obere Klebstoffreservoir oder das untere Klebstoffreservoir entleert werden, oder beide Klebstoffreservoirs können gleichzeitig entleert werden.

Der Klebstoff in den Klebstoffreservoirs ist vorzugsweise flüssig und von einer Schutzhülle umgeben. Diese wird dann beim Einführen des Stempels zerstört. Es ist auch möglich, dass der Klebstoff als Thermoplast ausgebildet ist, der bei Erwärmung schmelzbar ist. Dann kann nach Einsetzen des Verbindungselementes der Klebstoff durch eine Wärmequelle oder eine elektromagnetische Heizquelle erwärmt werden, um dann im zumindest angeschmolzenen Zustand von dem Stempel verdrängt werden.

Gemäß einer weiteren Ausgestaltung der Erfindung verbleibt der Stempel nach dem Verschieben des Trennelementes bis zu einem unteren Ende in der Hülse. Der Stempel wird dabei einerseits mechanisch durch die Hülse gehalten und andererseits ist er mit der Hülse verklebt. Dadurch kann der Stempel gleich zur Befestigung weiterer Bauteile, wie Beschlagsteilen eingesetzt werden. Hierfür kann der Stempel auch einen inneren Schraubkanal zur Befestigung aufweisen.

In einem speziellen Anwendungsfall kann das Trennelement entfallen, d.h. wenn die unteren Öffnungen kleiner sind als die oberen Öffnungen und Längsnuten angeordnet sind. Dabei ist das Verbindungselement komplett mit Klebstoff gefüllt und die Verteilung des Klebstoffs kann durch die Öffnungen und dem zurückzulegenden Weg des Stempels definiert werden.

Die Erfindung wird nachfolgend anhand mehrerer Ausführungsbeispiele mit Bezug auf die beigefügten Zeichnungen näher erläutert. Es zeigen:

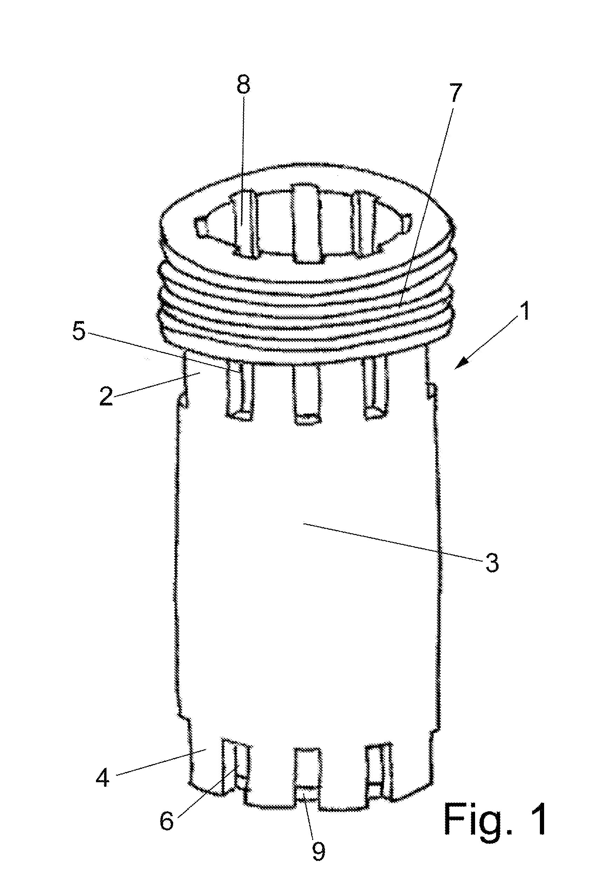

- Figur 1: eine perspektivische Ansicht eines erfindungsgemäßen Verbindungselementes;
- Figuren 2A bis 2D: mehrere geschnittene Ansichten des Verbindungselementes der Figur 1 bei der Montage;
- Figuren 3A bis 3D: mehrere geschnittene Seitenansichten eines Verbindungselementes während der Montage in leicht modifizierter Ausführungsform;
- Figuren 4A bis 4D: mehrere geschnittene Ansichten eines Verbindungselementes während der Montage in einer leicht modifizierten Ausführungsform, und
- Figur 5: eine geschnittene Seitenansicht einer weiteren Ausführungsform eines Verbindungselementes.

Ein Verbindungselement 1 umfasst eine Hülse 3, mit einem oberen Abschnitt 2 und einem unteren Abschnitt 4, zwischen denen ein Mittelabschnitt vorgesehen ist. An dem oberen Abschnitt 2 sind über den Umfang verteilt mehrere Öffnungen 5 und an dem unteren Abschnitt 4 sind ebenfalls mehrere über den Umfang verteilte Öffnungen 6 vorgesehen. Die Öffnungen 5 und 6 sind jeweils schlitzförmig ausgebildet und in regelmäßigen Abständen angeordnet. Statt der dargestellten acht Öffnungen 5 und 6 können natürlich mehr oder weniger Öffnungen vorgesehen werden.

An dem oberen Abschnitt 2 ist oberhalb der Öffnungen 5 ein geschlossener Ring 7 vorgesehen, der am Umfang mit ringförmigen Rippen versehen ist und klemmend in eine kreisförmige Öffnung eingefügt werden kann.

In der Hülse 3 sind zumindest im oberen Bereich des Mittelabschnittes Längskanäle 8 ausgebildet, die sich zu den Öffnungen 5 erstrecken. An dem unteren Abschnitt 4 ist ein Boden 9 an der Hülse 3 ausgebildet.

Die Längskanäle enden dort, wo sich die Kante des Trennelementes 10 befindet, die das obere Klebstoffreservoir 11 abschließt, wenn das Trennelement 10 seine Bewegungsrichtung nach unten abgeschlossen bzw. seine untere Endposition erreicht hat.

Die Hülse 3 ist aus Kunststoff hergestellt, kann aber auch aus anderen Materialien bestehen.

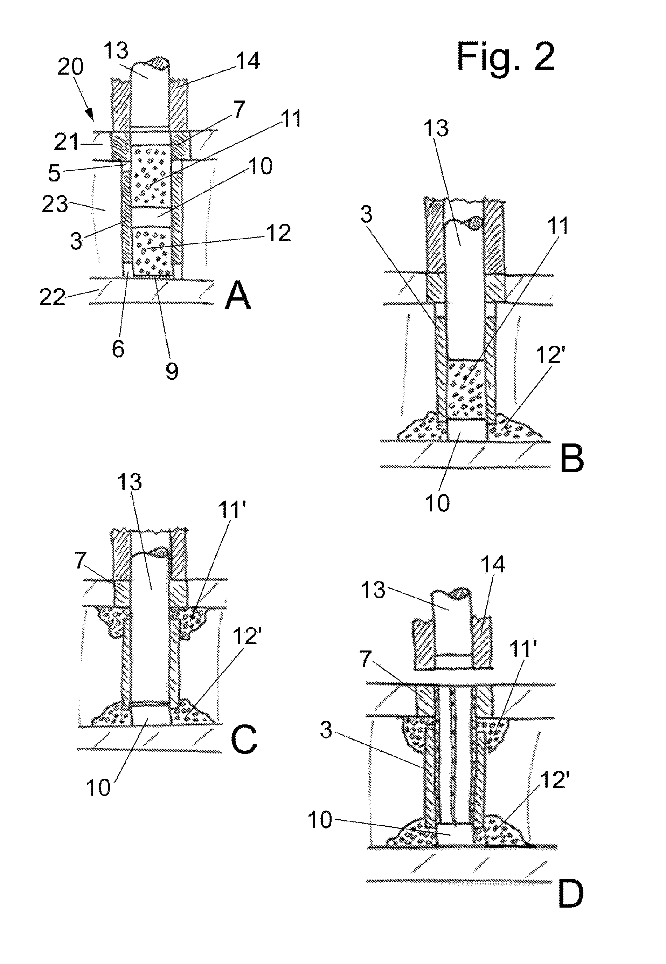

In Figur 2A ist eine mögliche Einbausituation des Verbindungselementes 1 dargestellt. Die Hülse 3 ist in eine Aussparung an einer Leichtbauplatte 20 eingefügt, die eine obere Deckschicht 21 und eine untere Deckschicht 22 aufweist, zwischen denen eine Zwischenlage 23 angeordnet ist. Die Deckschichten 21 und 22 können aus dünnen Holzwerkstoffplatten oder Pappe bestehen, während die Zwischenlage 23 meist eine Vielzahl von Hohlräumen aufweist und beispielsweise als Wabenpappe ausgebildet ist.

Die Aussparung in der Leichtbauplatte 20 ist so ausgebildet, dass Sie sich bis zu einer Innenseite der unteren Deckschicht 22 erstreckt. Der Boden 9 liegt somit benachbart zu der Innenseite der unteren Deckschicht 22. Der Ring 7 am oberen Abschnitt 2 ist im Wesentlichen formschlüssig in eine kreisförmige Öffnung der Ausnehmung eingefügt.

Wie in der Figur 2A zu sehen ist, befindet sich innerhalb der Hülse 3 ein Trennelement 10, das ein oberes Klebstoffreservoir 11 von einem unteren Klebstoffreservoir trennt. Die Klebstoffreservoirs 11 und 12 umfassen im Wesentlichen das gleiche Volumen, können aber auch in unterschiedlicher Größe ausgebildet sein. Das Klebstoffreservoir kann durch einen Einkomponentenklebstoff in flüssiger Form, aber auch durch pastöse oder feste Klebstoffe gebildet sein. Vorzugsweise ist ein flüssiger Klebstoff in einer Schutzhülle eingekapselt, so dass ein unbeabsichtigtes Austreten sicher vermieden wird. Ferner kann ein thermoplastischer Klebstoff eingesetzt werden, der durch eine externe Wärmequelle oder durch ein elektromagnetisches oder elektrisches Wechselfeld erwärmt wird. Bei einer direkten Erwärmung des Klebstoffes ist die Temperaturbeständigkeit der Hülse 3 höher zu wählen als die Erweichungstemperatur des Klebstoffes. Bei einer indirekten Erwärmung des Klebstoffes über elektromagnetische oder elektrische Wechselfelder enthält der Klebstoff Füllmaterialien mit ferromagnetischen, ferrimagnetischen oder piezoelektrischen Eigenschaften, mittels denen der Klebstoff erwärmt wird. Zudem ist es möglich, dass Trennelement 10 indirekt zu erwärmen, beispielsweise durch elektromagnetische Energie, so dass die Erwärmung auf die Klebstoffreservoirs 11 und 12 übertragen werden kann. Bei einer entsprechenden Beschaffenheit des Klebstoffes oder des Heizelementes wäre auch eine Erhitzung des Klebstoffes direkt oder indirekt über Mikrowellenverfahren möglich.

Zum Verkleben des Verbindungselementes 1 wird ein Stempel 13 eingesetzt, der durch eine kreisförmige innere Öffnung an dem Ring 7 in die Hülse 3 einschiebbar ist. Der Stempel 13 kann dabei an einer ringförmigen Führung 14 geführt sein, die auch für eine Abdichtung gegenüber dem Ring 7 sorgt und die die Kanäle 8 stirnseitig nach außen abschließt.

Nach der Verflüssigung des Klebstoffes wird der Stempel 13 in die Hülse 3 eingeführt, so dass die in Figur 2B gezeigte Position erreicht wird. Da die Öffnungen 6 an dem unteren Abschnitt größer ausgebildet sind als die Öffnungen 5 an dem oberen Abschnitt 2, tritt zunächst der Klebstoff aus dem unteren Klebstoffreservoir 12 durch die Öffnungen 6 aus und verteilt sich über den Umfang benachbart zu der Hülse 3. Das Trennelement 10 wird dabei bis zum Boden 9 bewegt, wobei das Trennelement 10 in der unteren Endposition die Öffnungen 6 weitgehend verschließt. Dadurch wird das obere Klebstoffreservoir 11 nun entleert, das über die Längskanäle 8 nach oben gedrückt wird, bis der Klebstoff aus den Öffnungen 5 am oberen Abschnitt 2 austritt. In Figur 2C ist die Position gezeigt, bei der der Klebstoff 11' am oberen Abschnitt ausgetreten ist und der Klebstoff 12' am unteren Abschnitt 4 ausgetreten ist. Der Klebstoff 11' und 12' kann nun aushärten und die Hülse 3 innerhalb der Leichtbauplatte 20 sicher verkleben. Dabei sorgt eine radiale Anordnung der Öffnungen 5 und 6, vorzugsweise in gleichmäßigen Abständen zueinander, für ein gezieltes Austreten des Klebstoffes 11 und 12 benachbart zu der Innenwand der oberen Deckschicht 21 und der unteren Deckschicht 22.

Anschließend wird der Stempel 13 entsprechend Figur 2D herausgezogen und die in der Leichtbauplatte 20 verklebte Hülse 3 kann nun zur Befestigung weiterer Bauteile dienen, insbesondere für die Befestigung von Beschlagteilen, wobei in der Hülse 3 Schraubbolzen eingedreht werden können.

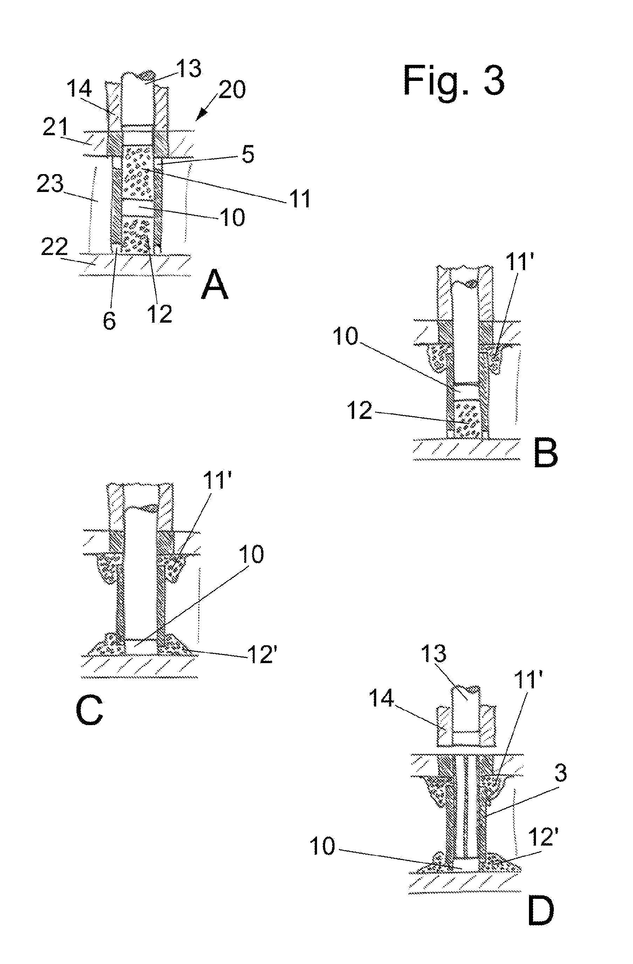

In den Figuren 3A bis 3D ist die Montage eines leicht modifizierten Verbindungselementes 1 dargestellt, bei dem die Öffnungen 5 in der Summe eine größere Öffnungsfläche besitzen als die Öffnungen 6 am unteren Abschnitt 4. Dadurch wird beim Einführen eines Stempels 13 aus der Ausgangsposition (Figur 3A) zunächst das obere Klebstoffreservoir 11 entleert. Der Klebstoff 11 verteilt sich beim Austreten durch die Öffnungen 5 gleichmäßig am Umfang der Hülse 3 und sorgt somit für eine Verklebung des oberen Abschnittes 5 an der Innenseite der oberen Deckschicht 21. Gemäß Figur 3D kann der Längskanal 8 bereits im mittleren Abschnitt in dieser Ausführung enden.

Wird der Stempel nach Erreichen des Trennelementes 10 (Figur 3B) weiter nach unten bewegt, wird auch das untere Klebstoffreservoir 12 entleert, bis die in Figur 3C gezeigte Position erreicht ist. In dieser Position sind die Klebstoffreservoirs 11 und 12 entleert und der Klebstoff befindet sich außen an der Hülse 3, wie dies durch die Klebstoffverteilung 11' und 12' gezeigt ist.

Anschließend wird der Stempel 13 wieder aus der Hülse 3 gezogen (Figur 3D) und das Verbindungselement kann für die Befestigung weiterer Bauteile eingesetzt werden.

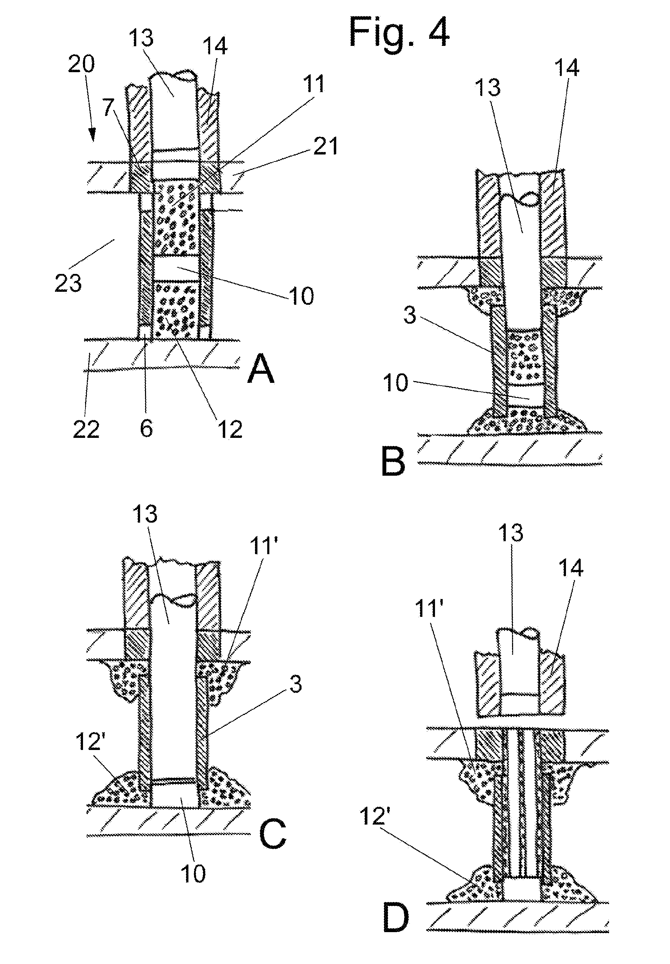

In den Figuren 4A bis 4D ist eine weitere Ausführungsform des Verbindungselementes gezeigt, bei der die Öffnungsfläche der Öffnungen 5 und 6 ungefähr gleich groß ist. Dies führt dazu, dass bei einem Eintauchen des Stempels 13 aus einer Ausgangsposition (Figur 4A) sowohl der Klebstoff aus dem oberen Klebstoffreservoir 11 als auch aus dem unteren Klebstoffreservoir 12 gleichzeitig durch die Öffnungen 5 bzw. 6 herausgedrückt wird (Figur 4B).

Das Trennelement bewegt sich somit schon beim Eintauchen des Stempels 13 in einem gewissen Umfang nach unten, wobei der Stempel 13 soweit nach unten gedrückt wird, bis das Trennelement 10 an einem Boden der Hülse 3 oder direkt an der Innenseite der unteren Deckschicht 22 anliegt. (Figur 4C).

Anschließend wird der Stempel 13 wieder aus der Hülse 3 wieder herausgezogen und das Verbindungselement 1 kann zur Befestigung weiterer Bauteile eingesetzt werden.

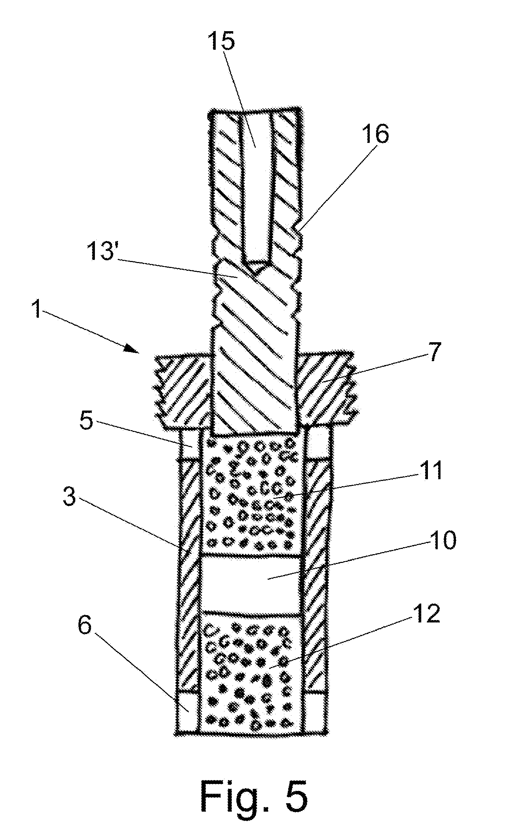

In Figur 5 ist eine modifizierte Ausführungsform eines Verbindungselementes 1' dargestellt, das hinsichtlich der Gestaltung der Hülse 3 wie bei den vorangegangenen Ausführungsbeispielen ausgebildet sein kann. Eine ringförmige Führung 14 sorgt für eine Abdichtung gegenüber dem Ring 7, die auch die Kanäle 8 stirnseitig nach außen abschließt. Lediglich zum Herausdrücken des Klebstoffes aus den Klebstoffreservoirs 11 und 12 wird ein Stempel 13' eingesetzt, der nach dem Verdrängen des Klebstoffes und Verschieben des Trennelementes 10 in der Hülse 3 verbleibt und dort verklebt wird. Der Stempel 13' kann somit unmittelbar zur Befestigung eines Bauteiles an der Leichtbauplatte 20 dienen. In dem dargestellten Ausführungsbeispiel weist der Stempel 13' einen inneren Schraubkanal 15 auf, der dann mit einem Schraubbolzen verbunden werden kann. An einem äußeren Umfang im mittleren Bereich sind Rillen 16 ausgebildet, damit der Stempel 13' in diesen Bereich gut mit der Hülse 3 verklebt werden kann. Statt der Rillen 16 kann auch ein Außengewinde an dem Stempel 13' ausgebildet sein. Dadurch kann die Montage vereinfacht werden, da der Stempel 13' nicht mehr eingeklopft bzw. eingeschlagen sondern eingeschraubt werden kann.

In den dargestellten Ausführungsbeispielen ist das obere Klebstoffreservoir 11 von dem unteren Klebstoffreservoir über ein als Scheibe ausgebildetes Trennelement 10 getrennt. Eine hermetische Abtrennung der Klebstoffreservoirs 11 und 12 ist allerdings nicht notwendig, da ein Vermischen der Klebstoffreservoirs 11 und 12 beim Verpressen keine wesentliche Beeinträchtigung mit sich bringt. Es soll lediglich gewährleistet werden, dass mittels des Verbindungselementes 1 eine Verklebung sowohl durch Austreten von Klebstoff durch die oberen Öffnungen 5 als auch durch ein Austreten von Klebstoff an den unteren Öffnungen 6 gewährleistet wird. Zudem ist es auch möglich, das Trennelement 10 wegzulassen und nur durch Eindrücken eines Stempels den Klebstoff aus dem dann einteilig ausgebildeten Klebstoffreservoir durch obere und untere Öffnungen herauszudrücken.

Das oder die Klebstoffreservoir(s) können zudem von einer Schutzhülle umgeben sein, beispielsweise von einer Kunststofffolie, um ein Austrocknen des Klebstoffs zu vermeiden. Dadurch wird auch ein versehentliches Entleeren der Klebstoffreservoirs vermieden, wobei die Schutzhülle beim Einführen des Stempels zerstört wird.

## Patentansprüche

1. Verbindungselement (1), insbesondere zur Montage von Beschlagsteilen an Leichtbauplatten (20), mit einer Hülse (3), die in eine Aussparung eines Bauteils einfügbar ist und an einem oberen Abschnitt (2) und einem unteren Abschnitt (4) jeweils mehrere über den Umfang verteilte Öffnungen (5, 6) aufweist, wobei ein mittlerer Abschnitt geschlossen ausgebildet ist, **dadurch gekennzeichnet, dass** in der Hülse (3) ein oberes Klebstoffreservoir (11) und ein unteres Klebstoffreservoir (12) angeordnet ist.

2. Verbindungselement nach Anspruch 1, **dadurch gekennzeichnet, dass** die Klebstoffreservoirs (11, 12) über ein im mittleren Abschnitt angeordnetes Trennelement (10) voneinander getrennt sind.

3. Verbindungselement nach Anspruch 1 oder 2, **dadurch gekennzeichnet, dass** über einen Stempel (13) der Klebstoff aus den Klebstoffreservoirs (11, 12) verdrängbar ist, damit der Klebstoff über die Öffnungen (5, 6) im oberen und unteren Abschnitt (2, 4) austritt.

4. Verbindungselement nach einem der Ansprüche 1 bis 3, **dadurch gekennzeichnet, dass** am oberen Abschnitt (2) der Hülse (3) oberhalb der Öffnung (5) ein geschlossener Ring (7) vorgesehen ist, der klemmend an einer Öffnung in einer Deckschicht (21) einer Leichtbauplatte (20) festlegbar ist.

5. Verbindungselement nach einem der Ansprüche 1 bis 4, **dadurch gekennzeichnet, dass** der Ring (7) eine innere zylindrische Öffnung aufweist, in die der Stempel (13) im Wesentlichen passgenau einfügbar ist.

6. Verbindungselement nach einem der Ansprüche 1 bis 5, **dadurch gekennzeichnet, dass** an einer Innenseite der Hülse (3) ein oder mehrere Längskanäle (8) für den Klebstoff ausgebildet sind.

7. Verbindungselement nach Anspruch 6, **dadurch gekennzeichnet, dass** die Längskanäle sich von dem mittleren Abschnitt zu den Öffnungen (5) an den oberen Abschnitt (2) der Hülse (3) erstrecken.

8. Verbindungselement nach Anspruch 6, **dadurch gekennzeichnet, dass** die Längskanäle sich von der Oberkante des Trennelementes (19) in Endpositionen zu den Öffnungen (5) an den oberen Abschnitt (2) der Hülse (3) erstrecken.

9. Verbindungselement nach einem der Ansprüche 1 bis 8, **dadurch gekennzeichnet, dass** das Trennelement (10) als Trennscheibe ausgebildet ist, die von dem mittleren Abschnitt zu dem unteren Abschnitt (4) verschiebbar ist.

10. Verbindungselement nach einem der Ansprüche 1 bis 9, **dadurch gekennzeichnet, dass** das Trennelement (10) nach dem Verschieben in den unteren Abschnitt (4) die Öffnungen (6) im unteren Abschnitt (4) zumindest weitgehend verschließt.

11. Verbindungselement nach einem der Ansprüche 1 bis 10, **dadurch gekennzeichnet, dass** die Öffnungen (5, 6) an dem oberen und unteren Abschnitt (2, 4) eine Erstreckung in Längsrichtung der Hülse (3) zwischen 1 mm und 10 mm, vorzugsweise zwischen 2 mm bis 7 mm besitzen.

12. Verbindungselement nach einem der Ansprüche 1 bis 11, **dadurch gekennzeichnet, dass** die Öffnungsflächen der Öffnungen (5) am oberen Abschnitt (2) und den Öffnungsflächen der Öffnungen (6) am unteren Abschnitt (4) im Wesentlichen gleich groß sind.

13. Verbindungselement nach einem der Ansprüche 1 bis 12, **dadurch gekennzeichnet, dass** die Öffnungsflächen der Öffnungen (5) am oberen Abschnitt (2) gegenüber den Öffnungsflächen der Öffnungen (6) am unteren Abschnitt (4) größer sind.

14. Verbindungselement nach einem der Ansprüche 1 bis 13, **dadurch gekennzeichnet, dass** die Öffnungsflächen der Öffnungen (5) am oberen Abschnitt (2) gegenüber den Öffnungsflächen der Öffnungen (6) am unteren Abschnitt (4) kleiner sind.

15. Verbindungselement nach einem der Ansprüche 1 bis 14, **dadurch gekennzeichnet, dass** der Klebstoff in den Klebstoffreservoirs (11, 12) flüssig ist und von einer Schutzhülle umgeben ist.

16. Verbindungselement nach einem der Ansprüche 1 bis 15, **dadurch gekennzeichnet, dass** der Klebstoff ein Thermoplast ist, der bei Erwärmung schmelzbar ist.

17. Verbindungselement nach einem der Ansprüche 1 bis 16, **dadurch gekennzeichnet, dass** der Stempel (13') nach dem Verschieben des Trennelementes (10) bis zu einem unteren Ende in der Hülse (3) verbleibt.

18. Verbindungselement nach Anspruch 17, **dadurch gekennzeichnet, dass** der Stempel (13') einen inneren Schraubkanal (15) zur Befestigung weiterer Bauteile aufweist.

19. Verbindungselement nach einem der Ansprüche 1 bis 18, **dadurch gekennzeichnet, dass** die Klebstoffreservoirs (11, 12) von einer Schutzhülle umgeben sind.
